# EUROPÄISCHE PATENTSCHRIFT

(11) **EP 2 057 373 B1**
(45) Veröffentlichungstag und Bekanntmachung des Hinweises auf die Patenterteilung: **13.01.2010**
(21) Anmeldenummer: 07802533.5
(22) Anmeldetag: 08.08.2007
(51) Int. Cl.: F02P 23/04, H01S 3/00, H01S 3/091

(54) **ZÜNDEINRICHTUNG FÜR EINE BRENNKRAFTMASCHINE**
IGNITION DEVICE FOR AN INTERNAL COMBUSTION ENGINE
DISPOSITIF D'ALLUMAGE POUR MOTEUR À COMBUSTION INTERNE

(30) Priorität: 22.08.2006 DE 102006039393
(43) Veröffentlichungstag der Anmeldung: 13.05.2009
(73) Patentinhaber: Robert Bosch GmbH, 70442 Stuttgart (DE)
(72) Erfinder: VOGEL, Manfred, 71254 Ditzingen (DE); HERDEN, Werner, 70839 Gerlingen (DE); RIDDERBUSCH, Heiko, 71701 Schwieberdingen (DE)
(86) Internationale Anmeldenummer: PCT/EP2007/058222
(87) Internationale Veröffentlichungsnummer: WO 2008/022924

(56) Entgegenhaltungen:
- EP-A- 1 253 316
- WO-A-2005/066488
- DE-A1- 3 400 034
- JP-A- 2006 242 036
- KR-A- 20040 049 078

## Beschreibung

### Stand der Technik

Die Erfindung betrifft eine Zündeinrichtung für eine Brennkraftmaschine, insbesondere eines Kraftfahrzeugs, mit einer Lasereinrichtung, die einen laseraktiven Festkörper aufweist und einen Laserstrahl, vorzugsweise in Form eines Laserimpulses, zur Abstrahlung in einen Brennraum erzeugt, wobei der Lasereinrichtung eine Fokussieroptik zur Fokussierung des Laserstrahls zugeordnet ist.

Eine Zündeinrichtung dieser Art ist bereits aus der DE 10 2004 001 554 A1 bekannt

Die spät veröffentlichte JP 2006 242 036 beschreibt auch eine Lasezündeinrichtung.

### Aufgabe der Erfindung

Es ist Aufgabe der vorliegenden Erfindung, eine Zündeinrichtung der eingangs genannten Art derart weiterzubilden, dass sie einen vereinfachten Aufbau und gleichzeitig eine höhere Betriebssicherheit sowie Effizienz bei der Zündung eines Luft/Kraftstoffgemisches aufweist.

Diese Aufgabe wird bei einer Zündeinrichtung der eingangs genannten Art erfindungsgemäß dadurch gelöst, dass der Laserstrahl ein von der Kreisform abweichendes Strahlprofil aufweist.

### Vorteilhafte Wirkungen

Das erfindungsgemäß nicht-kreisförmig ausgebildete Strahlprofil des in den Brennraum abgestrahlten Laserstrahls ermöglicht bei gegebener Wellenlänge des Laserstrahls und gegebener Brennweite der Fokussieroptik vorteilhaft eine Reduktion des Fokusdurchmessers des Laserstrahls und damit eine höhere Energiedichte in einem Zündpunkt, auf den der Laserstrahl fokussiert wird, wodurch die Zuverlässigkeit bei der Entzündung eines Luft-/Kraftstoffgemisches in dem Brennraum der Brennkraftmaschine gesteigert wird, ohne dass die Leistung des Laserstrahls, beziehungsweise die Energie eines entsprechenden Laserimpulses, erhöht werden müsste.

Es ist ferner sehr vorteilhaft, wenn eine Pumplichtquelle zur Beaufschlagung der Lasereinrichtung mit Pumplicht vorgesehen ist, wobei das der Lasereinrichtung zugeführte Pumplicht ein von der Kreisform abweichendes Strahlprolil aufweist. Untersuchungen der Anmelderin haben ergeben, dass ein derartiges, nicht-kreisförmiges Strahlprofil des Pumplichts auf ein ebenfalls nicht kreisförmiges Strahlprolil bei dem von der Lasereinrichtung erzeugten Laserstrahl führt, wenn die Lasereinrichtung mit dem ein nicht-kreisförmiges Strahlprofil aufweisenden Pumplicht optisch gepumpt wird.

Besonders vorteilhaft ist es ferner, wenn das Strahlprofil des Laserstrahls und/oder des Pumplichts eine Rechteck- beziehungsweise Linienform und/oder Kreisringform und/oder Hantelform aufweist. Insbesondere ein linien- beziehungsweise rechteckförmiges Strahlprofil ermöglicht ganz besonders vorteilhaft die Verwendung von optischen Elementen, wie beispielsweise der Pumplichtquelle beziehungsweise dem laseraktiven Festkörper, welche ebenfalls einen rechteckförmigen Querschnitt aufweisen, wodurch bei diesen Elementen auf komplexere zylindrische Strukturen verzichtet werden kann, was einerseits zu geringeren Herstellungskosten führt und andererseits eine effizientere Kühlung der betreffenden Elemente ermöglicht.

Vorteilhaft kann eine Lichtleitereinrichtung zur Versorgung der Lasereinrichtung mit von einer Pumplichtquelle bereitgestelltem Pumplicht vorgesehen sein, wobei die Lichtleitereinrichtung eine Mehrzahl von Lichtleitfasern aufweist, die einerseits die Übertragung einer verhältnismäßig hohen Pumpleistung ermöglichen und im Gegensatz zu einer einzelnen Faser hinsichtlich ihrer Form, insbesondere in den Endbereichen, besonders gut an eine besondere Geometrie einer Pumplichtquelle oder der Lasereinrichtung anpassbar sind.

Besonders bevorzugt sind der Lasereinrichtung zugeordnete Enden der mehreren Lichtleitfasern in Abhängigkeit eines vorgebbaren Strahlprofils für den Laserstrahl und/oder das Pumplicht relativ zueinander angeordnet, wodurch es möglich ist, von einer herkömmlichen Pumplichtquelle bereitgestelltes Pumplicht, das eingangsseitig in mehrere der Lichtleitfasern eingekoppelt wird, einem gewünschten Strahlprolil entsprechend in die Lasereinrichtung einzukoppeln. Beispielsweise kann durch eine entsprechende Hintereinanderanordnung der Enden verschiedener Lichtleitfasern ein linien- beziehungsweise rechteckförmiges Strahlprofil erzielt werden, obwohl die speisende Pumplichtquelle ein herkömmliches kreisförmiges Strahlprofil aufweist. Umgekehrt kann Pumplicht mit linienförmigem Strahlquerschnitt durch die erfindungsgemäße Anordnung der Faserenden in einen kreisförmigen oder eine sonstige Form aufweisenden Strahlquerschnitt transformiert werden.

Durch die erfindungsgemäße Verwendung der mehreren Lichtleitfasern sind demnach nahezu beliebige Kombinationen für das Strahlprofil des Pumplichts erzielbar. Da sich das Strahlprofil des Pumplichts erfahrungsgemäß auch auf das Strahlprofil eines in Folge der Beaufschlagung mit diesem Pumplicht entstehenden Laserstrahls auswirkt, kann durch die erfindungsgemäße Verwendung der mehreren Lichtleitfasern und der besonderen Anordnung ihrer Endabschnitte dementsprechend auch das Strahlprofil des von der Lasereinrichtung erzeugten Laserstrahls geformt werden.

Die mehreren Lichtleitfasern der erfindungsgemäßen Lichtleitereinrichtung können zumindest abschnittsweise zu einem Rundkabel und/oder einem Flachkabel zusammengefasst werden und erlauben damit eine optimale Konfigurierbarkeit der Lichtleitereinrichtung, die noch weiter gesteigert werden kann, wenn Lichtleitfasern eingesetzt werden, die einen kreisförmigen oder elliptischen Querschnitt aufweisen.

Besonders vorteilhaft kann auch eine Pumplichtquelle vorgesehen sein, die eine Mehrzahl von Pumplichtemittern aufweist, wodurch im Gegensatz zu einem einzigen Pumplichtemitter eine höhere Pumpleistung bereitgestellt werden kann. Einer Lichtleitfaser der erfindungsgemäßen Lichtleitereinrichtung sind jeweils ein oder mehrere Pumplichtemitter zugeordnet, die ihr Pumplicht in die betreffende Lichtleitfaser einkoppeln.

Sehr zweckmäßig ist eine linien- oder matrixförmige Anordnung der mehreren Pumplichtemitter, so dass insbesondere bei der Ausbildung der Lichtleitereinrichtung als Flachbandkabel die Geometrien der Pumplichtquelle und des Kabels einander angepasst sind und dementsprechend keine weiteren verlustbehafteten Elemente vorgesehen werden müssen, die eine optische Verbindung der Pumplichtquelle mit der Lichtleitereinrichtung realisieren.

Eine effiziente Einkopplung von Pumplicht in die Lichtleitereinrichtung durch Reduzierung der fast-axis-Divergenz kann beispielsweise durch Anordnung einer Zylinderlinse, insbesondere einer asphärischen Zylinderlinse, zwischen der Pumplichtquelle und der Lichtleitereinrichtung erzielt werden.

Obwohl insbesondere bei Anwendungen im Kraftfahrzeugbereich die Pumplichtquelle vorzugsweise entfernt von der üblicherweise brennraumnah angeordneten Lasereinrichtung angeordnet und mit dieser über die beschriebene Lichtleitereinrichtung verbunden ist, kann vorteilhaft auch vorgesehen sein, dass die Pumplichtquelle der Lasereinrichtung bzw. dem laseraktiven Festkörper direkt eingangsseitig zugeordnet ist, dass die Pumplichtquelle eine Mehrzahl von Pumplichtemittern aufweist, und dass die einzelnen Pumplichtemitter selbst in Abhängigkeit eines vorgebbaren Strahlprofils für den Laserstrahl und/oder das Pumplicht relativ zueinander angeordnet sind. D.h., bei dieser Erfindungsvariante wird die Beaufschlagung der Lasereinrichtung mit Pumplicht eines nicht kreisförmigen Strahlprofils direkt durch die Anordnung der einzelnen Pumplichtemitter relativ zueinander erzielt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Kurze Beschreibung der Zeichnung

In der Zeichnung zeigt:
- Figur 1: eine schematische Darstellung einer Brennkraftmaschine mit einer erfindungsgemäßen Zündeinrichtung;
- Figur 2: eine schematische Darstellung der Zündeinrichtung aus Figur 1;
- Figur 3: eine vergrößerte Darstellung einer Lasereinrichtung der Zündeinrichtung aus Figur 2;
- Figur 4a: eine Draufsicht auf die Lasereinrichtung aus Figur 3 im Detail;
- Figur 4b: eine Seitenansicht der Lasereinrichtung aus Figur 3;
- Figur 5a bis 5d: Details einer Pumplichtquelle der erfindungsgemäßen Zündeinrichtung; und
- Figur 6a bis 6c: verschiedene, durch die erfindungsgemäße Anordnung von Lichtleiter- elementen erzielbare Strahlprofile für Pumplicht.

### Ausführungsformen der Erfindung

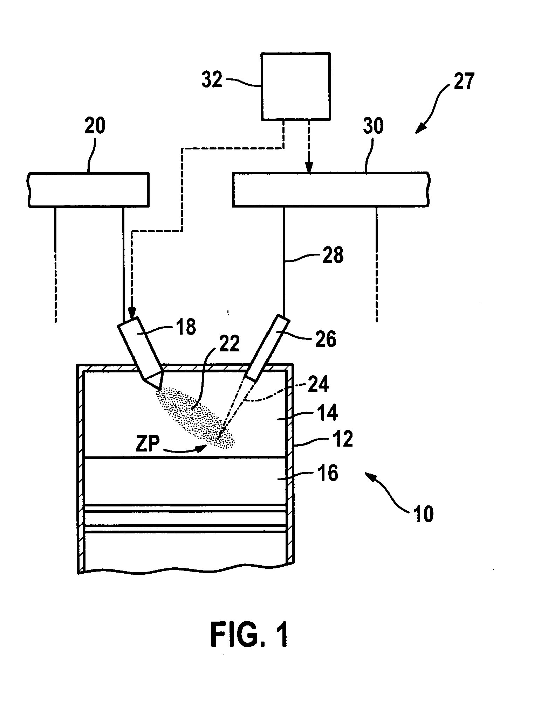

Eine Brennkraftmaschine trägt in Figur 1 insgesamt das Bezugszeichen 10. Sie dient zum Antrieb eines nicht dargestellten Kraftfahrzeugs. Die Brennkraftmaschine 10 umfasst mehrere Zylinder, von denen in Figur 1 nur einer mit dem Bezugszeichen 12 bezeichnet ist. Ein Brennraum 14 des Zylinders 12 wird von einem Kolben 16 begrenzt. Kraftstoff gelangt in den Brennraum 14 direkt durch einen Injektor 18, der an einen auch als Rail bezeichneten Kraftstoff-Druckspeicher 20 angeschlossen ist.

In den Brennraum 14 eingespritzter Kraftstoff 22 wird mittels eines Laserstrahls 24 entzündet, der vorzugsweise in Form eines Laserimpulses von einer eine Lasereinrichtung 26 umfassenden Zündeinrichtung 27 in den Brennraum 14 abgestrahlt wird. Hierzu wird die Lasereinrichtung 26 über eine Lichtleitereinrichtung 28 mit einem Pumplicht gespeist, welches von einer Pumplichtquelle 30 bereitgestellt wird. Die Pumplichtquelle 30 wird von einem Steuergerät 32 gesteuert, das auch den Injektor 18 ansteuert.

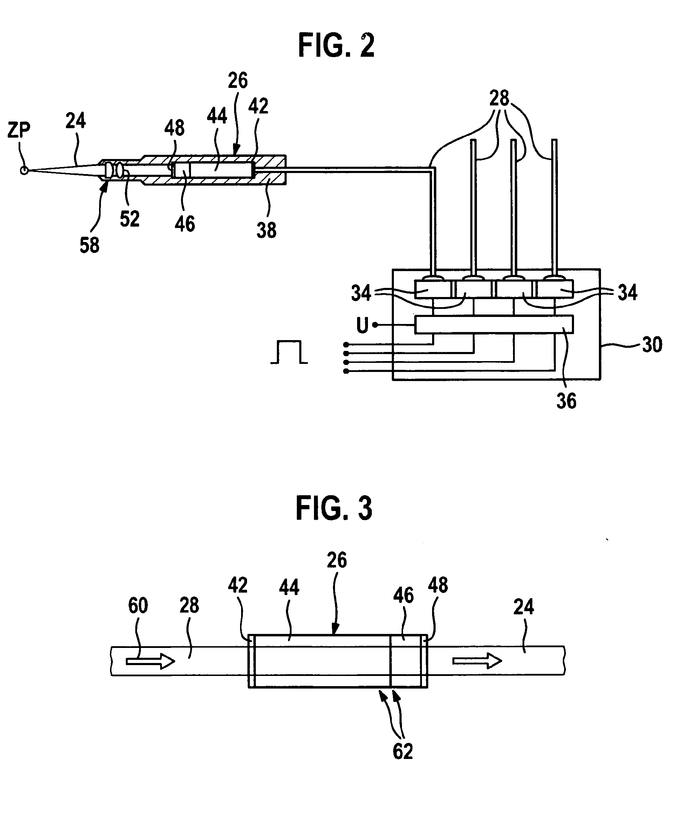

Wie aus Figur 2 hervorgeht, speist die Pumplichtquelle 30 mehrere Lichtleitereinrichtungen 28 für verschiedene Lasereinrichtungen 26, die jeweils unterschiedlichen Zylindern der Brennkraftmaschine 10 zugeordnet sind. Hierzu verfügt die Pumplichtquelle 30 insgesamt über mehrere Einzel-Pumplichtquellen 34, die jeweils mit einer ihnen zugeordneten Pulsstromversorgung 36 verbunden sind.

Die Lasereinrichtung 26 umfasst ein Gehäuse 38 und weist ferner einen laseraktiven Festkörper 44 sowie eine passive Güteschaltung 46 auf, die zusammen mit einem Einkoppelspiegel 42 und einem Auskoppelspiegel 48 einen Laser-Oszillator bilden. Eine in Figur 2 links des Auskoppelspiegels 48 angeordnete Fokussieroptik 52 dient zur Fokussierung eines von der Lasereinrichtung 26 erzeugten Laserstrahls 24 beziehungsweise Laserimpulses auf einen in Figur 2 schematisch dargestellten Zündpunkt ZP, der jenseits des Brennraumfensters 58 in dem Brennraum 14 (Figur 1) der Brennkraftmaschine 10 angeordnet ist.

Eine Detaildarstellung der Lasereinrichtung 26 ist in Figur 3 angegeben. Die grundsätzliche Funktionsweise der Lasereinrichtung 26 ist folgende: Pumplicht 60, das der Lasereinrichtung 26 über die Lichtleitereinrichtung 28 zugeführt wird, tritt durch den für eine Wellenlänge des Pumplichts 60 durchsichtigen Einkoppelspiegel 42 in den laseraktiven Festkörper 44 ein. Dort wird das Pumplicht 60 absorbiert, was zu einer Besetzungsinversion führt. Die hohen Verluste der passiven Güteschaltung 46 verhindern zunächst eine Laser-Oszillation in der Lasereinrichtung 26. Mit steigender Pumpdauer steigt jedoch auch die Strahlungsdichte in dem Inneren des durch den laseraktiven Festkörper 44 und die passive Güteschaltung 46 sowie die Spiegel 42, 48 gebildeten Resonator 62. Ab einer gewissen Strahlungsdichte bleicht die passive Güteschaltung 46 beziehungsweise ein sättigbarer Absorber der passiven Güteschaltung 46 aus, so dass eine Laser-Oszillation in dem Resonator 62 zustande kommt.

Durch diesen an sich bekannten Mechanismus wird ein Laserstrahl 24 in Form eines Riesenimpulses erzeugt, der durch den Auskoppelspiegel 48 hindurchtritt und durch die Fokussieroptik 52 (Figur 2) auf den in dem Brennraum 14 befindlichen Zündpunkt ZP fokussiert wird.

Erfindungsgemäß weist der Laserstrahl 24 ein von der Kreisform abweichendes Strahlprofil auf. Da bei gegebener Wellenlänge des Laserstrahls 24 und bei gegebener Brennweite der Fokussieroptik 52 der Fokusdurchmesser des Laserstrahls 24 in dem Zündpunkt ZP allein von dem Durchmesser des Laserstrahls 24 vor der Fokussieroptik 52 abhängt, insbesondere antiproportional hierzu ist, ergibt sich aufgrund der Verwendung eines nicht-kreisförmigen Strahlprofils besonders vorteilhaft eine Verringerung des Fokusdurchmessers und damit eine Steigerung der Strahlungsdichte in dem Zündpunkt ZP, wodurch ein in dem Brennraum 14 befindliches Luft-/Kraftstoffgemisch bei gleicher Leistung eines Laserimpulses zuverlässiger entzündet werden kann.

Im Gegensatz zu einem herkömmlichen kreisförmigen Strahlprofil des Laserstrahls 24 weisen zumindest manche Komponenten des erfindungsgemäßen Laserstrahls 24 aufgrund des nicht-kreisförmigen Strahlprofils einen größeren Abstand von der optischen Achse der Fokussieroptik 52 auf als dies bei den herkömmlichen Systemen der Fall ist, so dass sich vorteilhaft die entsprechende Verringerung des Fokusdurchmessers ergibt.

Das erfindungsgemäße nicht-kreisförmige Strahlprofil des Laserstrahls 24 kann erfindungsgemäß beispielsweise über eine besondere Versorgung der Lasereinrichtung 26 mit Pumplicht 60 realisiert werden. Untersuchungen der Anmelderin haben ergeben, dass eine Speisung der Lasereinrichtung 26 mit Pumplicht 60, das selbst ein nicht-kreisförmiges Strahlprofil aufweist, auf ein Strahlprofil des resultierenden Laserstrahls 24 beziehungsweise Laserimpulses führt, das vergleichbar ist zu dem Strahlprofil des Pumplichts 60, d.h. ebenfalls ein nicht-kreisförmiges Strahlprofil aufweist.

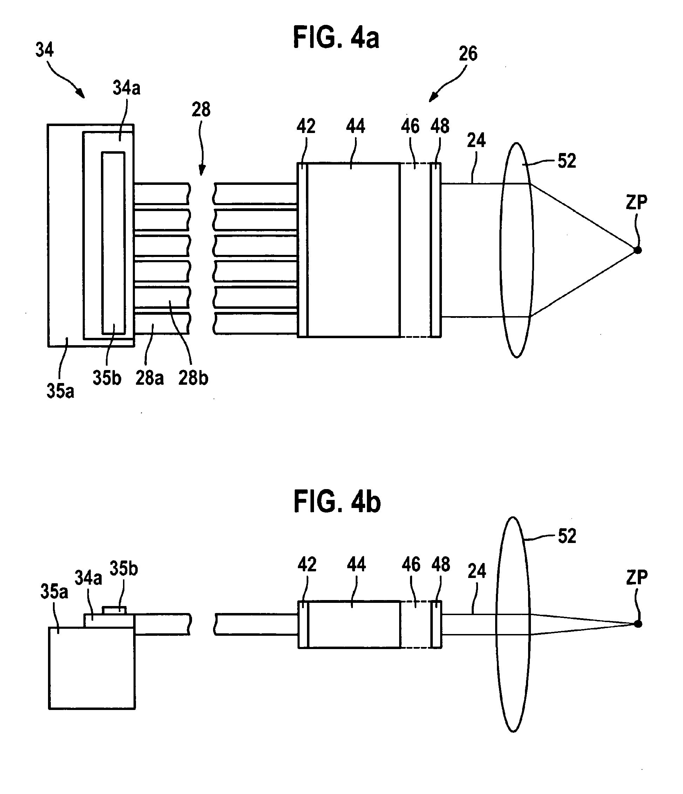

Eine erfindungsgemäße Anordnung zur Erzeugung eines derartigen "anormalen" Strahlprofils für den Laserstrahl 24 ist in Figur 4a in einer Draufsicht und in Figur 4b in einer entsprechenden Seitenansicht gezeigt.

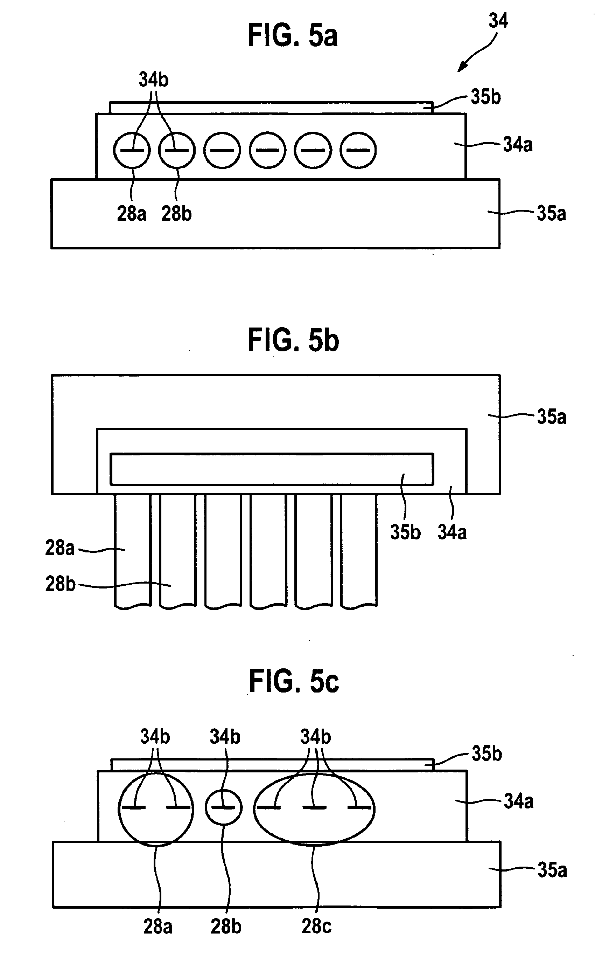

Wie aus Figur 4a ersichtlich, weist eine der Lasereinrichtung 26 zugeordnete Einzel-Pumplichtquelle 34 einen sogenannten Halbleiterlaserbarren 34a auf, der mehrere Pumplichtemitter 34b besitzt, vergleiche Figur 5a. Die Pumplichtemitter 34b des Halbleiterlaserbarrens 34a sind entlang einer gedachten und in Figur 5a horizontal verlaufenden Linie angeordnet. In Figur 5a ist unterhalb des Halbleiterlaserbarrens 34a eine Kühlvorrichtung 35a angedeutet, und oberhalb des Halbleiterlaserbarrens 34a ist ein Kontaktierungselement 35b vorgesehen, das den Halbleiterlaserbarren 34a mit der in Figur 2 abgebildeten Pulsstromversorgung 36 verbindet.

Durch die rechteckige Querschnittsform des Halbleiterlaserbarrens 34a kann dieser besonders effizient gekühlt werden, was sich positiv auf die Wellenlängenstabilität der Pumplichtemitter 34b und damit auch auf die Zuverlässigkeit bei der Erzeugung der Laserimpulse 24 durch die Lasereinrichtung 26 auswirkt. Auch die Montage bzw. Handhabung bei dessen Fertigung ist durch die rechteckige Querschnittsform des Halbleiterlaserbarrens 34a vereinfacht.

Erfindungsgemäß weist die Lichtleitereinrichtung 28 (Figur 4a), über die die Lasereinrichtung 26 mit dem von den Pumplichtemittern 34b erzeugten Pumplicht 60 versorgt wird, eine Mehrzahl von Lichtleitfasern 28a, 28b, .. auf, wobei jede Lichtleitfaser 28a, 28b, .. eingangsseitig einem Pumplichtemitter 34b (Figur 5a) zugeordnet ist. Durch die beschriebene Hintereinanderanordnung der Pumplichtemitter 34b in Linienform ergibt sich vorteilhaft eine entsprechende Hinterbeziehungsweise Nebeneinanderanordnung der Lichtleitfasern 28a, 28b, .. der Lichtleitereinrichtung 28, wodurch eine Konfiguration in der Art eines Flachbandkabels realisiert ist.

Wie aus Figur 4a ersichtlich, werden die einzelnen Lichtleitfasern 28a, 28b, .. der Lichtleitereinrichtung 28 ausgangsseitig in derselben Nebeneinanderanordnung an dem Einkoppelspiegel 42 der Lasereinrichtung 26 angeordnet, so dass sich ein entsprechend linienbeziehungsweise rechteckförmiges Strahlprofil für das Pumplicht ergibt, das durch die Lichtleitfasern 28a, 28b, .. der Lichtleitereinrichtung 28 von der Einzel-Pumplichtquelle 34 an die Lasereinrichtung 26 übertragen wird. Dementsprechend weist auch der von der Lasereinrichtung 26 infolge der Beaufschlagung mit Pumplicht erzeugte Laserstrahl 24 beziehungsweise Laserimpuls ein nicht-kreisförmiges, sondern vielmehr linien- beziehungsweise rechteckförmiges Strahlprofil auf. Bei entsprechender Auslegung des rechteckförmigen Strahlprofils ergibt sich gegenüber herkömmlichen Systemen mit einem kreisförmigen Strahlprofil der Vorteil, dass zumindest einige Komponenten des Laserstrahls 24 in solchen Bereichen auf die Fokussieroptik 52 treffen, die einen größeren Abstand von der optischen Achse der Fokussieroptik 52 aufweisen, als die Randbereiche eines kreisförmigen Strahlprofils bei herkömmlichen Systemen.

Infolgedessen ergibt sich die bereits beschriebene vorteilhafte Verringerung des Fokusdurchmessers des Laserstrahls 24 in dem Zündpunkt ZP und damit eine zuverlässigere Zündung des Luft-/Kraftstoffgemisches in dem Brennraum 14 der Brennkraftmaschine 10 (Figur 1).

Anstelle der Ausbildung eines Flachbandkabels durch die einzelnen Lichtleitfasern 28a, 28b, der Lichtleitereinrichtung 28 können die Lichtleitfasern 28a, 28b, .. zumindest abschnittsweise, insbesondere in von ihren Anfangs- beziehungsweise Endbereichen verschiedenen Bereichen auch die Konfiguration eines Rundkabels oder eine sonstige Konfiguration annehmen.

Die erfindungsgemäße Verwendung eines nicht-kreisförmigen Strahlprofils ist sowohl bei Lasereinrichtungen 26 mit passiver Güteschaltung 46 anwendbar wie auch bei Lasereinrichtungen ohne eine derartige passive Güteschaltung. Daher ist die passive Güteschaltung 46 in den Figuren 4a, 4b durch eine gestrichelte Linie symbolisiert.

Figur 5b zeigt eine Vergrößerung der in Figur 4a abgebildeten Draufsicht auf die Einzel-pumplichtquelle 34.

In Figur 5c ist ein schematischer Querschnitt einer weiteren Ausführungsform der erfindungsgemäßen Zündeinrichtung 27 im Anschlussbereich der Lichtleitfasern 28a, 28b, 28c an die Pumplichtemitter 34b abgebildet. Wie aus Figur 5c ersichtlich, können sowohl Lichtleitfasern 28a, 28b mit Kreisquerschnitt wie auch Lichtleitfasern 28c mit elliptischem Querschnitt zur Bildung der Lichtleitereinrichtung 28 verwendet werden. Eine Kombination von Lichtleitfasern 28a, 28b, 28c mit unterschiedlicher Geometrie beziehungsweise Querschnittsform ist ebenfalls denkbar.

Ferner ist es erfindungsgemäß möglich, mehreren Pumplichtemittern 34b eine einzige Lichtleitfaser zuzuordnen. Beispielsweise sind der Lichtleitfaser 28a zwei Pumplichtemitter 34b zugeordnet, und der Lichtleitfaser 28 c mit elliptischem Querschnitt sind drei Pumplichtemitter 34b zugeordnet, während der Lichtleitfaser 28b, wie bereits unter Bezugnahme auf Figur 5a beschrieben, ein Pumplichtemitter 34b zugeordnet ist.

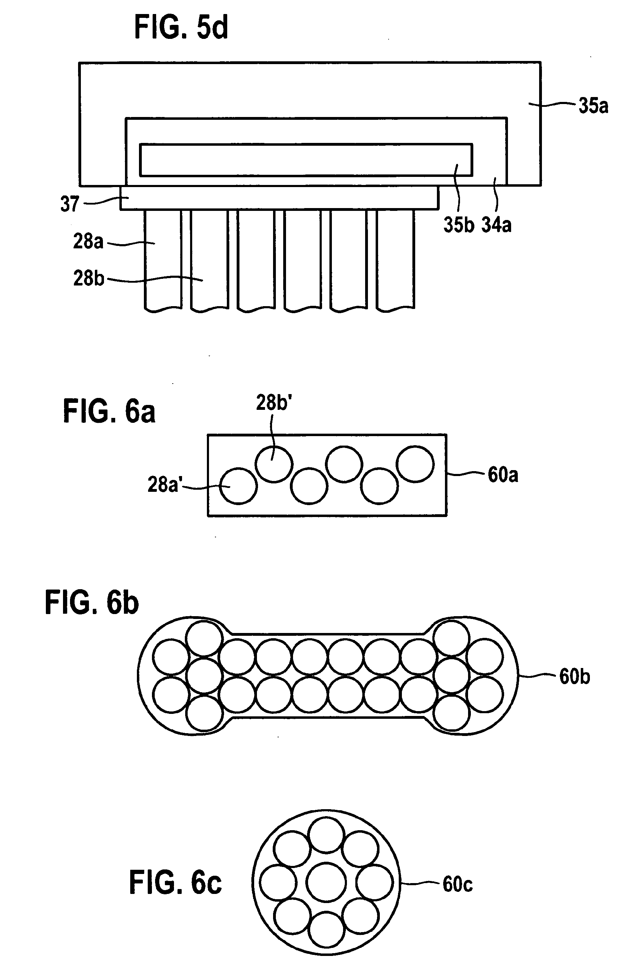

Bei einer in Figur 5d abgebildeten weiteren sehr vorteilhaften Ausführungsform der vorliegenden Erfindung ist eine Einkoppeloptik 37 vorgesehen, die beispielsweise durch eine Zylinderlinse, insbesondere eine asphärische Zylinderlinse, realisiert sein kann und durch eine entsprechende Bündelung des Pumplichts eine fast-axis-Divergenz der Pumplichtemitter 34b kompensiert, so dass eine größere Effizienz bei der Einkopplung von Pumplicht aus den Pumplichtemittern 34b in die Lichtleitfasern 28a, 28b, .. gegeben ist.

Erfindungsgemäß können auch andere als linienförmige beziehungsweise rechteckförmige Strahlprofile für das Pumplicht 60 erzielt werden. Dies ist einerseits dadurch realisierbar, dass die eingangsseitig mit Pumplicht gespeisten Lichtleitfasern 28a, 28b, .. an ihrem der Lasereinrichtung 26 beziehungsweise dem Einkoppelspiegel 42 zugewandten Ausgang in der entsprechenden Weise relativ zueinander angeordnet sind. Beispielsweise lässt sich ein im Wesentlichen rechteckförmiges Pumplichtprofil 60a durch die Anordnung der Endbereiche 28a', 28b', .. der Lichtleitfasern 28a, 28b, .. in der in Figur 6a abgebildeten Weise erzielen.

Ein hantelförmiges Pumplichtprofil 60b kann beispielsweise durch die in Figur 6b abgebildete Konfiguration der Endbereiche der Lichtleitfasern 28a, 28b, .. erreicht werden.

Weitere Pumplichtprofile, wie beispielsweise ein kreisringförmiges Pumplichtprofil 60c, vergleiche Figur 6c, sind ebenfalls durch eine entsprechende Anordnung der Endbereiche der Lichtleitfasern 28a, 28b, .. der Lichtleitereinrichtung 28 erzielbar.

Neben einer linienförmigen Anordnung der Pumplichtemitter 34b in der Einzel-Pumplichtquelle 34 können auch andere geeignete Anordnungen, insbesondere eine Anordnung in Matrixform oder dergleichen vorgesehen sein.

Bei einer nicht abgebildeten weiteren vorteilhaften Ausführungsform der erfindungsgemäßen Zündeinrichtung ist vorgesehen, dass die Pumplichtquelle 30 dem laseraktiven Festkörper 44 beziehungsweise der Lasereinrichtung 26 direkt eingangsseitig zugeordnet ist, wobei wiederum mehrere Pumplichtemitter 34b vorgesehen sind, und wobei diese Pumplichtemitter 34b in Abhängigkeit eines vorgebbaren Strahlprofils für den Laserstrahl 24 und/oder das Pumplicht 60 relativ zueinander angeordnet sind. Das heißt, anstelle der Verwendung einer Lichtleitereinrichtung 28 kann die Pumplichtquelle 30 direkt neben der Lasereinrichtung 26 angeordnet sein, wobei sich das gewünschte Strahlprofil für das Pumplicht 60 durch eine entsprechende Anordnung der Pumplichtemitter 34b ergibt.

Eine weitere vorteilhafte Ausführungsform der vorliegenden Erfindung sieht vor, das nicht-kreisförmige Strahlprofil des Laserstrahls 24 dadurch zu erzeugen, dass der Auskoppelspiegel 48 der Lasereinrichtung 26, vgl. Figur 2, mit einer über seine Fläche ungleichmäßig verteilten Transmission für das Laserlicht 24 ausgebildet ist.

Neben der gesteigerten Energiedichte in dem Zündpunkt ZP ermöglicht die vorliegende Erfindung auch eine optimale Ausnutzung des lichtleitenden Querschnitts der Lichtleitfasern 28a, 28b, .. durch eine entsprechende Zuordnung der einzelnen Pumplichtemitter 34b zu den Lichtleitfasern 28a, 28b, .., und weil die Transformation von Strahlprofilen über die relative Anordnung der Lichtleitfasern 28a, 28b, .. zueinander einstellbar ist, können auch die bei herkömmlichen Systemen erforderlichen optischen Querschnittswandler entfallen. Der rechteckförmige Querschnitt der Einzel-Pumplichtquelle 34 sowie der Lasereinrichtung 26 insgesamt vereinfachen deren Fertigung und Montage und ermöglichen eine effizienter Kühlung. Darüberhinaus kann das Brennraumfenster 58 (Figur 2) vorteilhaft ebenfalls rechteckförmig, d.h. insbesondere nicht-kreisförmig, ausgeführt werden und kann dementsprechend ebenfalls besser Wärme an seine Umgebung abführen.

Durch das erfindungsgemäß verwendete anormale Strahlprofil ist es ferner vorteilhaft möglich, den Fokusdurchmesser des Laserstrahls 24 zu reduzieren, ohne gleichzeitig aufwendige separate Mittel zur Aufweitung des Laserstrahls vor der Fokussieroptik 52 vorzusehen.

Das erfindungsgemäße Prinzip ist nicht auf die Anwendung bei Zündeinrichtungen für Brennkraftmaschinen von Kraftfahrzeugen beschränkt, sondern kann insbesondere auch bei Stationärmotoren Anwendung finden.

## Patentansprüche

1. Zündeinrichtung für eine Brennkraftmaschine (10), insbesondere eines Kraftfahrzeugs, mit einer Lasereinrichtung (26), die einen laseraktiven Festkörper (44) aufweist und einen Laserstrahl (24), vorzugsweise in Form eines Laserimpulses, zur Abstrahlung in einen Brennraum (14) erzeugt, wobei der Lasereinrichtung (26) eine Fokussieroptik (52) zur Fokussierung des Laserstrahls (24) zugeordnet ist, **dadurch gekennzeichnet, dass** der Laserstrahl (24) ein von der Kreisform abweichendes Strahlprofil (60a, 60b, 60c) aufweist.

2. Zündeinrichtung nach Anspruch 1, **dadurch gekennzeichnet, dass** eine Pumplichtquelle (30) zur Beaufschlagung der Lasereinrichtung (26) mit Pumplicht (60) vorgesehen ist, wobei das der Lasereinrichtung (26) zugeführte Pumplicht (60) ein von der Kreisform abweichendes Strahlprofil (60a, 60b, 60c) aufweist.

3. Zündeinrichtung nach einem der Ansprüche 1 oder 2, **dadurch gekennzeichnet, dass** das Strahlprofil (60a, 60b, 60c) des Laserstrahls (24) und/oder des Pumplichts (60) eine Rechteckbeziehungsweise Linienform und/oder Kreisringform und/oder Hantelform aufweist.

4. Zündeinrichtung nach einem der vorstehenden Ansprüche, **gekennzeichnet durch** eine Lichtleitereinrichtung (28) zur Versorgung der Lasereinrichtung (26) mit von einer/der Pumplichtquelle (30) bereitgestelltem Pumplicht (60), wobei die Lichtleitereinrichtung (28) eine Mehrzahl von Lichtleitfasern (28a, 28b, ..) aufweist.

5. Zündeinrichtung nach Anspruch 4, **dadurch gekennzeichnet, dass** mindestens eine Lichtleitfaser (28a, 28b, ..) einen kreisförmigen oder elliptischen Querschnitt aufweist.

6. Zündeinrichtung nach einem der Ansprüche 4 oder 5, **dadurch gekennzeichnet, dass** der Lasereinrichtung (26) zugeordnete Enden (28a', 28b', ..) der Lichtleitfasern (28a, 28b, ..) in Abhängigkeit eines vorgebbaren Strahlprofils (60a, 60b, 60c) für den Laserstrahl (24) und/oder das Pumplicht (60) relativ zueinander angeordnet sind.

7. Zündeinrichtung nach einem der Ansprüche 4 bis 6, **dadurch gekennzeichnet, dass** die Lichtleitfasern (28a, 28b, ..) der Lichtleitereinrichtung (28) zumindest abschnittsweise zu einem Rundkabel und/oder Flachkabel zusammengefasst sind.

8. Zündeinrichtung nach einem der vorstehenden Ansprüche, **gekennzeichnet durch** eine Pumplichtquelle (30), die vorzugsweise eine Mehrzahl von Pumplichtemittern (34b) aufweist.

9. Zündeinrichtung nach Anspruch 8, **dadurch gekennzeichnet, dass** einer Lichtleitfaser (28a, 28b, ..) einer beziehungsweise der Lichtleitereinrichtung (28) zur Versorgung der Lasereinrichtung (26) mit Pumplicht (60) jeweils ein oder mehrere Pumplichtemitter (34b) zugeordnet sind, die ihr Pumplicht in die Lichtleitfaser (28a, 28b, ..) einkoppeln.

10. Zündeinrichtung nach einem der Ansprüche 8 oder 9, **dadurch gekennzeichnet, dass** die Pumplichtemitter (34b) linienförmig oder in Matrixform angeordnet sind.

11. Zündeinrichtung nach einem der Ansprüche 8 bis 10, **gekennzeichnet durch** eine Einkoppeloptik (37) zur Bündelung des Pumplichts (60), vorzugsweise ausgebildet als Zylinderlinse, insbesondere asphärische Zylinderlinse.

12. Zündeinrichtung nach Anspruch 8, **dadurch gekennzeichnet, dass** die Pumplichtquelle (30) der Lasereinrichtung (26) bzw. dem laseraktiven Festkörper (44) direkt eingangsseitig zugeordnet ist, dass die Pumplichtquelle (30) eine Mehrzahl von Pumplichtemittern (34b) aufweist, und dass die einzelnen Pumplichtemitter (34b) in Abhängigkeit eines vorgebbaren Strahlprofils (60a, 60b, 60c) für den Laserstrahl (24) und/oder das Pumplicht (60) relativ zueinander angeordnet sind.

## Claims

1. An ignition device for an internal combustion engine (10), in particular a motor vehicle, having a laser device (26) which has a laser-active solid body (44) and produces a laser beam (24), preferably in the form of a laser pulse, for emission into a combustion space (14), the laser device (26) being assigned a focusing optics (52) for focusing the laser beam (24), **characterized in that** the laser beam (24) has a beam profile (60a, 60b, 60c) deviating from the circular shape.

2. Ignition device according to Claim 1, **characterized in that** the pumping light source (30) is provided for applying pumping light (60) to the laser device (26), the pumping light (60) fed to the laser device (26) having a beam profile (60a, 60b, 60c) deviating from the circular shape.

3. Ignition device according to either of Claims 1 and 2, **characterized in that** the beam profile (60a, 60b, 60c) of the laser beam (24) and/or of the pumping light (60) has a rectangular or linear shape and/or annular shape and/or dumbbell shape.

4. Ignition device according to one of the preceding claims, **characterized by** a light guiding device (28) for supplying the laser device (26) with pumping light (60) provided by a/the pumping light source (30), the light guiding device (28) having a plurality of optical fibres (28a, 28b,...).

5. Ignition device according to Claim 4, **characterized in that** at least one optical fibre (28a, 28b, ...) has a circular or elliptical cross section.

6. Ignition device according to either of Claims 4 and 5, **characterized in that** ends (28a', 28b', ...), assigned to the laser device (26) of the optical fibres (28a, 28b, ...) are arranged relative to one another as a function of a prescribable beam profile (60a, 60b, 60c) for the laser beam (24) and/or the pumping light (60).

7. Ignition device according to one of Claims 4 to 6, **characterized in that** the optical fibres (28a, 28b, ...) of the light guiding device (28) are combined at least in sections to form a round cable and/or flat cable.

8. Ignition device according to one of the preceding claims, **characterized by** a pumping light source (30) which preferably has a plurality of pumping light emitters (34b).

9. Ignition device according to Claim 8, **characterized in that** in order to supply the laser device (26) with pumping light (60) an optical fibre (28a, 28b, ...) of an or the light guiding device (28) is respectively assigned one or more pumping light emitters (34b) which couple their pumping light into the optical fibre (28a, 28b, ...).

10. Ignition device according to either of Claims 8 and 9, **characterized in that** the pumping light emitters (34b) are arranged linearly or in matrix form.

11. Ignition device according to one of Claims 8 to 10, **characterized by** a coupling optics (37) for focusing the pumping light (60), preferably designed as a cylindrical lens, in particular an aspheric cylindrical lens.

12. Ignition device according to Claim 8, **characterized in that** the pumping light source (30) is assigned directly on the input side to the laser device (26) or the laser-active solid body (44), **in that** the pumping light source (30) has a plurality of pumping light emitters (34b), and **in that** the individual pumping light emitters (34b) are arranged relative to one another as a function of a prescribable beam profile (60a, 60b, 60c) for the laser beam (24) and/or the pumping light (60).

## Revendications

1. Dispositif d'allumage pour moteur à combustion interne (10), en particulier sur un véhicule automobile, avec un dispositif laser (26) qui présente un corps solide (44) à effet laser et qui forme un faisceau laser (24), de préférence sous là forme d'une impulsion laser, à projeter dans une chambre de combustion (14), une optique de concentration (52) étant associée au dispositif laser (26) pour concentrer le faisceau laser (24),
**caractérisé en ce que**
le profil (60a, 60b, 60c) du faisceau laser (24) a une forme non circulaire.

2. Dispositif d'allumage selon la revendication 1, **caractérisé en ce qu'**il présente une source (30) de lumière pompée qui applique de la lumière pompée (60) sur le dispositif laser (26) et **en ce que** le profil (60a, 60b, 60c) du faisceau de lumière pompée (60) apportée au dispositif laser (26) est non circulaire.

3. Dispositif d'allumage selon l'une des revendications 1 ou 2, **caractérisé en ce que** le profil (60a, 60b, 60c) du faisceau laser (24) et/ou celui de la lumière pompée (60) ont une forme rectangulaire, une forme linéaire, une forme en secteur circulaire et/ou une forme d'haltère.

4. Système d'allumage selon l'une des revendications précédentes, **caractérisé par** un dispositif (28) de guidage de lumière qui alimente le dispositif laser (26) en lumière pompée (60) délivrée par une ou la source (30) de lumière pompée, le dispositif (28) de guidage de lumière présentant plusieurs fibres (28a, 28b, ...) de guidage de lumière.

5. Dispositif d'allumage selon la revendication 4, **caractérisé en ce qu'**au moins une fibre (28a, 28b, ...) de guidage de lumière a une section transversale circulaire ou elliptique.

6. Dispositif d'allumage selon l'une des revendications 4 ou 5, **caractérisé en ce que** les extrémités (28a', 28b', ...) des fibres (28a, 28b, ...) de guidage de lumière associées au dispositif laser (26) sont disposées les unes par rapport aux autres en fonction d'un profil prédéterminé (60a, 60b, 60c) du faisceau laser (24) et/ou de la lumière pompée (60).

7. Dispositif d'allumage selon l'une des revendications 4 à 6, **caractérisé en ce que** les fibres (28a, 28b, ...) de guidage de lumière du dispositif (28) de guidage de lumière sont rassemblées au moins en partie pour former un câble rond et/ou un câble plat.

8. Dispositif d'allumage selon l'une des revendications précédentes, **caractérisé par** une source (30) de lumière pompée qui présente de préférence plusieurs émetteurs (34b) de lumière pompée.

9. Dispositif d'allumage selon la revendication 8, **caractérisé en ce qu'**un ou plusieurs émetteurs (34b) de lumière pompée sont associés à chacune des fibres (28a, 28b, ...) de guidage de lumière d'un ou du dispositif (28) de guidage de lumière pour alimenter le dispositif laser (26) en lumière pompée (60) et injectent leur lumière pompée dans les fibres (28a, 28b, ...) de guidage de lumière.

10. Dispositif d'allumage selon l'une des revendications 8 ou 9, **caractérisé en ce que** les émetteurs (34b) de lumière pompée sont disposés en ligne ou en matrice.

11. Dispositif d'allumage selon l'une des revendications 8 à 10, **caractérisé par** une optique d'injection (37) qui rassemble la lumière pompée (60), de préférence configurée comme lentille cylindrique et en particulier lentille cylindrique asphérique.

12. Dispositif d'allumage selon la revendication 8, **caractérisé en ce que** la source (30) de lumière pompée est associée directement à l'entrée du dispositif laser (26) ou du corps solide (44) à action laser, **en ce que** la source (30) de lumière pompée présente plusieurs émetteurs (34b) de lumière pompée et **en ce que** les différents émetteurs (34b) de lumière pompée sont disposés les uns par rapport aux autres en fonction d'un profil prédéterminé (60a, 60b, 60c) du faisceau laser (24) et/ou de la lumière pompée (60).
